# EUROPÄISCHE PATENTSCHRIFT

(11) **EP 1 900 948 B1**
(45) Veröffentlichungstag und Bekanntmachung des Hinweises auf die Patenterteilung: **24.05.2017**
(21) Anmeldenummer: 07114760.7
(22) Anmeldetag: 22.08.2007
(51) Int. Cl.: F16C 23/04, F16C 33/20

(54) **Gelenklager mit Kunststoffaussenring und Verfahren zu dessen Herstellung**
Pivot bearing with plastic outer ring and method for its manufacture
Palier pivotant à anneau extérieur en plastique et procédé de sa fabrication

(30) Priorität: 15.02.2007 DE 102007008584; 14.09.2006 DE 102006042999; 14.09.2006 DE 102006043065
(43) Veröffentlichungstag der Anmeldung: 19.03.2008
(73) Patentinhaber: Federal-Mogul Deva GmbH, 35260 Stadtallendorf (DE)
(72) Erfinder: Stadlmayr, August, 4693 Desselbrunn (AT); Laal Riahi, Kamran, 35037 Marburg (DE)
(74) Vertreter: Mehler Achler

(56) Entgegenhaltungen:
- WO-A1-2005/017240
- DE-A1- 3 524 761
- DE-C1- 4 220 327
- US-A1- 2002 155 287

## Beschreibung

Die Erfindung betrifft einen Außenring für ein Gelenklager bzw. ein solches Gelenklager, wobei der Außenring eine innen liegende Gleitschicht und eine außen liegenden Tragschicht aufweist und wobei die Gleitschicht und die Tragschicht aus einem gewickelten Faserverbundwerkstoff gebildet sind. Die Erfindung betrifft ferner ein Verfahren zur Herstellung eines solchen Außenrings, bei dem nacheinander eine Gleitschicht und eine Tragschicht aus Kunstharz getränkten Fasern auf einen Wickeldorn aufgewickelt und nach dem Aushärten aus dem so erzeugten Wickelkörper Außenringe gebildet werden.

Ein solches Verfahren ist beispielsweise aus der DE 42 20 327 bekannt. Bei dem dort offenbarten Verfahren zur Herstellung von Gelenklagern wird ein Wickelkern verwendet, der aus einer abwechselnden Anordnung von Formringen zur Bildung des pfannenförmigen Innenprofils des Außenrings und Trennringen zur Bildung der stirnseitigen Flächen besteht. Als Gleitschichtmaterial werden Kunstharz getränkte PTFE- und/oder hochfeste Fasern vorgeschlagen, die auf den Wickelkern aufgewickelt werden. Nach dem Aushärten des so gebildeten Wickelkörpers und nach außenumfänglicher Materialabtragung können die Außenringe und die Trennringe einzeln von der Welle abgezogen werden. Die Formringe verbleiben bei diesem Verfahren nach dem Abziehen von der Welle in dem Außenring und bilden den Innenring des Lagers. Der Nachteil ist, dass herstellungsbedingt kein Lagerspiel eingestellt werden kann und dass der Außenring den Formring, respektive den Innenring, eng umschließt. Ein solches Lager neigt zu einem schnellen Verschleiß.

Andere Verfahren, bei denen der Außenring und der Innenring getrennt hergestellt und nachträglich miteinander verbunden werden, sind mannigfaltig bekannt. Hierbei steht man immer vor der Frage, auf welche Weise der Außenring und der Innenring zusammengefügt werden sollen. Die DE 84 00 958 U1 schlägt beispielsweise vor, den Außenring des Radial-Gelenklagers so zu gestalten, dass dieser auf einer Stirnseite axial gerichtete federnde Stege aufweist, die beim Einsetzen des Lagers in eine Gehäusebohrung verformt werden, so dass ein Teil des Außenrings sich mit Vorspannung an die Oberfläche des zuvor eingebrachten, darin gelagerten Kugelzapfens anlegen. Auch hierbei besteht der Nachteil, dass sich das Lagerspiel auf diese Weise nur ungenau einstellen lässt. Ferner ist die Tragfähigkeit des Lagers aufgrund der umfänglich vereinzelten, elastischen Stege nicht eingeschränkt optimal.

Aus der WO 89/02542 ist ein Außenring aus zwei ineinander verpressten und/oder verschweißten Blechtöpfen bekannt, zwischen denen der Innenring eingeschlossen wird. Hierbei wird der zwischen den Blechtöpfen des Außenrings und dem Innenring eingeschlossene Hohlraum anschließend mit Kunststoff ausgefüllt. Ähnlich wie bei der DE 42 20 327 lässt sich auch hier kein Lagerspiel einstellen. Der Herstellungsprozess ist zudem aufwendig und die Fertigungsgenauigkeit gering.

Die DE 20 2004 013 251 U1 und die DE 10 2004 041 084 A1 schlagen zur Lösung des Problems einen aus zwei Ringen zusammengesetzten Außenring vor. Die zwei Ringe werden gemäß der DE 20 2004 013 251 U1 stirnseitig mittels Schweiß- oder Lötverbindung stoffschlüssig miteinander verbunden. Als Material für den Außenring wird entweder Metall oder Keramik vorgeschlagen. Im Fall der DE 10 2004 041 084 A1 werden die Ringe des geteilten Außenrings mittels einer gewickelten Umhausung radial und axial fixiert. Als Werkstoff für die Umhausung wird unter anderem ein Faserverbundwerkstoff vorgeschlagen.

Eine Weiterbildung des aus der DE 42 20 327 bekannten Verfahrens ist aus der DE 295 12 317 U1 bekannt. Hier ist der Wickelkern dahingehend weitergebildet, dass die Trennringe je zwei gegenüberliegende, axial gerichtete Vorsprünge aufweisen. Diese Vorsprünge bilden die Form für Einführnuten in den ausgeformten Außenringen, welche so bemessen sind, dass der Formring unter Drehung aus dem ausgehärteten Außenring herausgenommen und anschließend der eigentliche Innenring eingeführt werden kann. Zwar ist es auf diese Weise möglich, das Lagerspiel individuell einzustellen. Jedoch hat dieses Verfahren den Nachteil, dass aufgrund der Einführnuten der Lastquerschnitt des Außenrings verringert ist. Außerdem bilden die Nuten quer zur Laufrichtung verlaufende Kanten, welche einen Schmierfilmabriss und damit unzureichende Lagerschmierung bewirken können. Schließlich ist hier die Verschmutzungsgefahr erhöht.

Die DE 20 2005 005 829 behandelt spritzgegossene Lagergehäuse oder Lagerkörper aus Kunststoff, bei denen der Lagerkörper bzw. das Lagergehäuse sogleich als Form für den jeweiligen Gegenläufer verwendet werden. Ähnlich wie im Fall der DE 42 20 327 ergibt sich hieraus der Nachteil, dass bei diesem Verfahren kein Lagerspiel eingestellt werden kann.

Die DE 35 24 761 A1 beschreitet einen anderen Weg, indem sie einen an einer Stelle gesprengten Außenring vorschlägt, auf dessen Innenoberfläche mit Hilfe eines Werkzeugrings als Gießform ein Gleitlager aufgegossen wird. Zum Entfernen des Werkzeugrings und zum anschließenden Einsetzen des Innenrings wird der Außenring an der Trennfuge auseinander gezogen und somit aufgebogen.

Alle vorgenannten Verfahren weisen entweder den Nachteil auf, dass die Lager nicht mit ausreichender Genauigkeit und deshalb mit unzureichenden Eigenschaften hergestellt werden können oder dass die Herstellungsverfahren meist mehrere aufeinanderfolgende Prozess-Schritte und die Verarbeitung verschiedener Materialien erfordern, was den Herstellungsprozess langwierig und teuer gestalten und die Haltbarkeit der Lager einschränken kann.

Die Aufgabe der vorliegenden Erfindung ist es, besagte Nachteile zu überwinden.

Die Aufgabe wird durch einen Außenring gemäß Anspruch 1, ein Gelenklager gemäß Anspruch 8 und durch ein Verfahren gemäß Anspruch 11 gelöst.

Die erfindungsgemäß vorgesehene, den Außenring öffnende Trennfuge dient anders als bei dem bekannten Stand der Technik nicht dem Entformen eines Werkzeug- oder Formrings, sondern nur zum Zusammenbau, d.h. zum nachträglichen Einsetzen eines Innenrings. Gegenüber den bekannten Außenringen mit gegossener Gleitschicht, ist die Gleitschicht des erfindungsgemäßen Außenrings mit einem Verstärkungselement versehen und weist eine bessere Haftanbindung an die Tragschicht auf, was zusammen für eine verbesserte Stabilität des Lagers sorgt. Erfindungsgemäß macht man sich die Elastizität und die fertigungsbedingte Materialspannung des gewickelten Faserverbundwerkstoffes zu nutze. Man hat nämlich festgestellt, dass durch Wickeltechnik hergestellte Lagerringe eine ausreichend große, in Umfangsrichtung wirkende Eigenspannung aufweisen, welche dafür sorgt, dass die Trennfuge sich von selbst wieder schließt.

Bei dem erfindungsgemäßen Verfahren können die Gleitschicht und die Tragschicht deshalb in einfacher Weise auf einen zylindrischen Wickeldorn aufgewickelt werden. Dies kann geschehen, indem die Gleitschicht entweder aus einem einzelnen Faden oder einer einzelnen Faser, einem Bündel von Fäden oder Fasern oder aus einem vorgefertigten Gewebe oder Gewirke (Pre-Preg) gewickelt bzw. um den Wickeldorn gelegt wird. Der so erzeugte rohrförmige Wickelkörper mit Kreisquerschnitt wird nach Aushärten der Kunststoffmatrix entformt. Ein daraus beispielsweise durch Absägen vereinzelter zylindrischer Außenring wird mit genau einer diesen öffnenden Trennfuge versehen, welche sich aufgrund der Eigenspannung des gewickelten Ringwerkstoffes schließt. Die Trennfuge verläuft vorzugsweise in axialer Richtung und besonders bevorzugt in einer Ebene, die die Zylinderachse des Ringes einschließt, so dass die elastische Kraft senkrecht auf den beiden stirnseitigen Schnittflächen steht und zu keinen Relatiwerschiebung der offenen Ringenden führt. In einer alternativen Ausführungsform verläuft die Trennfuge in einem Zickzackmuster oder unregelmäßig.

Der Querschnitt des Rings ist nach dem Schließen der Trennfuge, wenn diese eine endliche Schnittbreite aufweist, zwar nicht mehr ideal kreisförmig. Dies ist aber nicht nachteilig, da er erfindungsgemäß zumindest auf der Innenseite nachgearbeitet wird. Dort wird Gleitschichtmaterial von dem Ring abgetragen wird, so dass die Gleitschicht eine teilsphärische Innenkontur zur Aufnahme eines Innenrings mit kugelsegmentförmiger Oberfläche gewünschter Abmessung erhält. Auf diese Weise wird zugleich das benötigte Lagerspiel eingestellt. Durch die geschlossene Trennfuge und das exakte Nacharbeiten ist sichergestellt, dass die Gleitfläche einen maximalen Tragquerschnitt über den gesamten Umfang erhält.

In der Regel wird der Außenring auch an seiner Außenseite nachgearbeitet werden. Dies wird von dem Verhältnis aus Ringumfang zu Schnittbreite der Trennfuge abhängen.

Die Gleitschicht des Außenrings weist als Verstärkungselement erfindungsgemäß einen Kunststofffaden mit Polyesterfilamenten und mit darin eingesponnenen PTFE-Partikeln auf. In entsprechender Weise Wird ein solches Verstärkungselement bei dem erfindungsgemäßen Verfahren angewandt. Wird die Gleitschicht mittelbar oder unmittelbar aus einem Kunststofffaden mit Polyesterfilamenten und mit eingearbeiteten PTFE-Partikeln gewickelt - mittelbar oder unmittelbar in dem oben genannten Sinne, dass die Gleitschicht entweder aus einem einzelnen Kunststofffaden, einem Bündel von Kunststofffäden oder aus einem aus Kunststofffäden gebildeten Gewirke oder Gewebe gewickelt wird -, ergibt sich eine deutlich verbesserte Nachbearbeitbarkeit im Vergleich mit bekannten Faserverbundwerkstoffen.

Als Festschmierstoff selbstschmierender Gleitschichten ist der Einsatz von PTFE (Polytetrafluorethylen) oder Graphit zwar bekannt. Diese Substanzen werden entweder in Partikelform der Kunststoffmatrix beigemischt oder im Fall von PTFE in Form eines Filaments zusammen mit anderen Kunststofffilamenten zu dem Kunststofffaden der Gleitschicht verzwirnt. Als Fadenkunststoff wird im Übrigen bekanntermaßen meist Polyester eingesetzt. Typischerweise werden dabei zwei Polyester und ein PTFE-Filament miteinander zu einem Faden verzwirnt.

Jedoch konnten noch nicht für alle Anwendungen zufrieden stellende tribologische und mechanische Eigenschaften erzielt werden. PTFE ist nämlich bedingt durch die starke zwischenmolekulare Bindung der Kohlenstoff- und Fluoratome sehr reaktionsträge und hat eine sehr geringe Oberflächenspannung. Eine chemische Reaktion der Kunststoffmatrix mit dem PTFE findet deshalb nicht oder nicht nennenswert statt. Insbesondere bei Verwendung der bekannten Kunststofffäden aus zwei Polyester- und einem PTFE-Filament wurde festgestellt, dass die PTFE-Filamente nur eine sehr geringe Haftanbindung zur Kunststoffmatrix erreichten. Dies hat zur Folge, dass die bekannten Gleitschichten nur schwer oder nahezu gar nicht mechanisch nachbearbeitet werden konnten, da die PTFE-Filamente nicht selten aus dem Faserverbund herausgelöst wurden. Die Folge war meistens eine Delamination der Gleitschicht, eine Verschlechterung der tribologischen Eigenschaften und der Verschleißfestigkeit der Gleitschicht.

Dieses Problem wird durch eine Gleitschicht auf Basis des erfindungsgemäßen Kunststofffadens mit Polyesterfilamenten und mit darin eingesponnenen PTFE-Partikeln gelöst. Dieser Faden hat gegenüber den bekannten gezwirnten Fasern zudem den Vorteil einer größeren Variabilität des Gehalts der einzelnen Komponenten des Fadens bzw. der Faser, insbesondere seines PTFE-Gehalts. Daher lassen sich bereits bei der Herstellung des Kunststofffadens dessen Eigenschaften sehr viel präziser modifizieren. Aus dem Umstand, dass die PTFE-Partikel im Gegensatz zu dem PTFE-Filament nicht zusammenhängen, d. h. durch die innerhalb der Polyesterfilamente zufällig angeordneten und verankerten PTFE-Partikel erscheint der Kunststofffaden aufgerauter und es wird eine bessere Haftanbindung zwischen dem Kunststofffaden und er Kunststoffmatrix erreicht. Schließlich verstärkt die Einbindung der PTFE-Partikel in den Kunststofffaden den mechanischen Halt derselben vor allem durch Formschluss.

Die Gleitschicht lässt sich deshalb mechanisch, d. h. spanabhebend gut bearbeiten. Die Verwendung des Kunststofffadens mit PTFE-Partikeln in der Gleitschicht eignet sich daher insbesondere für die erfindungsgemäßen Außenringe, bei welchen erst nachträglich Gleitschichtmaterial auf der Innenseite des Wickelkörpers abgetragen wird. Neben der besseren Bearbeitbarkeit werden durch die verbesserte Einbindung der PTFE-Partikel auch verbesserte Verschleißwerte, insbesondere hinsichtlich des Tiefenverschleißes erzielt.

Auch gegenüber den bekannten Gleitschichten mit PTFE-Partikeln als Festschmierstoff in der Kunststoffmatrix hat eine solche erfindungsgemäße Gleitschicht Vorteile. Auch als Festschmierstoff in der Kunststoffmatrix wirkt sich PTFE nämlich festigkeitsmindernd aus, wodurch die tribologischen Eigenschaften bei hoher Belastung und in wässriger Umgebung beeinträchtigt werden und während die PTFE-Partikel in der Kunststoffmatrix durch unterschiedliche Materialdichte meist eine inhomogene Verteilung einnehmen, ist die Verteilung der Partikel über die gesamte Gleitfläche gesehen sehr homogen, da die Partikel fest in der Faser/dem Faden eingebunden sind, welcher sich durch die gesamte Dicke der Gleitschicht erstreckt. Aufgrund der verbesserten Homogenität und der verbesserten mechanischen Einbindung werden schließlich auch verbesserte tribologische Eigenschaften erzielt. Dies gilt sowohl bei Trockenlauf als auch bei Einsatz in wässriger Umgebung.

Es hat sich als vorteilhaft herausgestellt, wenn der Gewichtsanteil der PTFE-Partikel im Kunststofffaden zwischen 2 Gew.-% und 60 Gew.-% und der Gewichtsanteil der Polyesterfilamente im Kunststofffaden zwischen 40 Gew.-% und 98 Gew.-% beträgt. Bei einem höheren Anteil an PTFE-Partikeln wird die Anbindung der Partikel an die Fasern schlechter und die Belastbarkeit der Gleitschicht nimmt ab. Besonders bevorzugt beträgt der Gewichtsanteil der PTFE-Partikel im Kunststofffaden zwischen 2 Gew.-% und 40 Gew.-%, der der Polyesterfilamente zwischen 60 Gew.-% und 98 Gew.-% und ganz besonders bevorzugt beträgt der Gewichtsanteil der PTFE-Partikel zwischen 30 Gew.-% und 36 Gew.-%, während der Gewichtsanteil der Polyesterfilamente im Kunststofffaden zwischen 64 Gew.-% und 70 Gew.-% beträgt. In diesem Zusammensetzungsbereich ist das Verhältnis aus Haltbarkeit und den tribologischen Eigenschaften der Gleitschicht für die meisten in Frage kommenden Gleitpartner optimal eingestellt.

In diesem Gewichtsverhältnis bleibt die Haftung zwischen dem Kunststofffaden und der Kunststoffmatrix ausreichend hoch, so dass eine gute Bearbeitbarkeit erzielt wird. Andererseits ist der Anteil der PTFE-Partikel ausreichend hoch, um eine gute Gleiteigenschaft zu erzielen.

Wie bereits zuvor bemerkt, kann das Verstärkungselement des Faserverbundwerkstoffes die Struktur eines aus dem Kunststofffaden erzeugten Gewebes oder Gewirkes aufweisen oder die schlichte Wickelstruktur eines einzelnen Fadens oder mehrerer paralleler oder gebündelter Fäden, welche durch Wickeln auf einem Wickelkern typischerweise erzeugt wird.

Hierbei kommen die Vorzüge des erfindungsgemäß verwendeten Kunststofffadens besonders gut zum Tragen. Aufgrund seiner Aufgerautheit eignet er sich nämlich hervorragend für die Herstellung von Gleitschichten im Wickelverfahren, bei dem der Faden zunächst durch eine Tränkwanne mit Kunstharz geführt wird und dabei ausreichend von dem Kunstharz durchtränkt wird. Das Wickelverfahren bietet den Vorteil, dass damit eine bestimmte Wickelstruktur erzeugt werden kann, welche auf die beabsichtigte Anwendung des Gleitelements bzw. der Gleitschicht abgestimmt ist. So können die Fasern möglichst beanspruchungsgerecht, d. h. der Kraft- und Spannungsverteilung entsprechend im Faserverbund positioniert werden.

Die Gleitschicht weist bevorzugt eine Kunststoffmatrix aus Kunstharz und besonders bevorzugt aus Epoxydharz auf.

Für manche Anwendungen werden - zusätzlich zu den in den Kunststofffaden eingesponnenen PTFE-Partikeln - bevorzugt auch der Kunststoffmatrix PTFE-Partikel hinzugefügt. Der Anteil der PTFE-Partikel in der Kunststoffmatrix beträgt dabei höchstens 40 Gew.-%.

Alternativ kann die Kunststoffmatrix Graphit-Partikel enthalten. Der Gewichtsanteil der Graphit-Partikel in der Kunststoffmatrix beträgt bevorzugt zwischen 1 Gew.-% und 40 Gew.-%.

Es können ferner auch sowohl PTFE-Partikel als auch Graphit-Partikel zur Kunststoffmatrix zugegeben werden, deren Gesamtgewichtsanteil vorzugsweise nicht mehr als 40 Gew.-% beträgt.

Wie auch die Gleitschicht, so ist die Tragschicht aus einem gewickelten Faserverbundwerkstoff ausgebildet. Der faserverstärkte Kunststoff der Tragschicht besteht vorteilhafterweise aus einer Kunststoffmatrix mit einer Glasfaser als Verstärkungselement, wobei die Kunststoffmatrix bevorzugt aus einem Kunstharz, besonders bevorzugt ebenfalls aus Epoxydharz besteht.

Wie für die Kunststoffmatrix der Gleitschicht eignet sich Epoxydharz auch als Kunststoffmatrix für die Tragschicht aufgrund hervorragender Haftungseigenschaften, mechanischer und dynamischer Eigenschaften. Epoxydharz weist aufgrund seiner molekularen Struktur ferner eine sehr gute Feuchtigkeitsbeständigkeit und vergleichsweise wenig Quellneigung auf. Aufgrund der Verwendung derselben Kunststoffmatrix in der Gleitschicht und der Tragschicht erhöhen sich zudem die Bindungskräfte zwischen der Gleitschicht und der Tragschicht. Auch das Verstärkungselement der Tragschicht weist bevorzugt die Struktur eines aus der Glasfaser erzeugten Gewebes oder Gewirkes, das um einen Wickelkern gewickelt wurde, oder in einer anderen bevorzugten Ausführungsform eine Wickelstruktur auf, die durch Wickeln der Glasfaser bzw. eines Glasfaserbündels auf einen Wickeldorn erzeugt wird.

Werden die Gleitschicht und die Tragschicht nacheinander im Wickelverfahren auf einem Wickeldorn abgelegt, erhöht dies die Effizienz der Herstellung des Lagerverbundwerkstoffs.

Besonders bevorzugt ist die Trennfuge keilförmig mit einem sich radial nach innen verjüngenden Querschnitt ausgebildet.

Hierbei wird der Schnitt, mit dem die Trennfuge erzeugt wird, so ausgewählt, dass die beiden stirnseitigen Schnittflächen nach dem Schließen der Trennfuge vollflächig aneinander anliegen. Der Keilwinkel des Trennfugenschnittes muss somit einem Winkelsegment des durch den Außenring gebildeten Kreises entsprechen.

Die Trennfuge kann mittels Formfräser, Sägeblatt und dgl. oder mittels Wasserstrahlschneiden oder Laserstrahlschneiden erzeugt werden. Aufgrund der großen inneren Werkstückspannung wurde das Wasserstrahlschneiden als verfahrenstechnisch bevorzugt herausgefunden. Zudem tritt bei diesem Verfahren kein Werkzeugverschleiß auf, welcher gerade bei Verbundwerkstoffen zu kurzen Werkzeugstandzeiten führen kann. Die so erzeugten Trennfugen weisen alle eine "endliche Schnittbreite" auf. Eine Trennfuge ohne Schnittbreite und damit ohne die Kreisform des Rings zu beeinträchtigen kann ferner in bekannter Weise durch Bruchtrennen oder das so genannte "Cracken" erzeugt werden.

Weitere Aufgabe, Merkmale und Vorteile der Erfindung werden nachfolgend anhand von Ausführungsbeispielen mit Hilfe der Zeichnungen erläutert. Es zeigen:
- Figur 1: einen Querschnitt durch den in der erfindungsgemäßen Gleitschicht verwendeten Kunststofffaden;
- Figuren 2a,b: eine perspektivische Darstellung des erfindungsgemäßen Gelenklagers, zur Illustration im Teilschnitt und in vollständiger Darstellung;
- Figuren 3a,b: zwei Diagramme des Reibungskoeffizienten eines erfindungsgemäßen Radialgleitlagers unter verschiedenen Belastungen im Trockenlauf;
- Figuren 4a,b: zwei Diagramme des Reibungskoeffizienten eines erfindungsgemäßen Radialgleitlagers unter verschiedenen Belastungen im Nasslauf und
- Figur 5: einen Querschnitt durch das erfindungsgemäße Gelenklager.

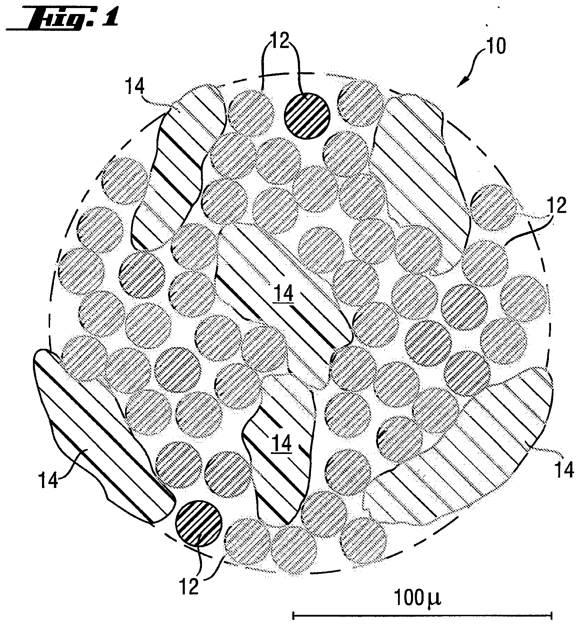

Der erfindungsgemäß für die Gleitschicht des Außenrings als Verstärkungselement verwendete Kunststofffaden 10 ist in vergrößerter Schnittdarstellung in Figur 1 gezeigt. Dieser besteht aus längs des Fadens orientierten Polyesterfilamenten 12 und enthält als zweiten Bestandteil PTFE-Partikel 14, welche in zufälliger Anordnung in die Polyesterfilamente 12 eingesponnen sind. Beim Herstellungsprozess gibt es sehr viele Möglichkeiten die Eigenschaften des Fadens zu modifizieren. Beispielsweise kann die Anzahl der Polyesterfilamente 12 pro Faden 10 je nach Anwendungsfall variiert werden. Dabei sollte jedoch auf ausreichenden Formschluss mit den eingebundenen PTFE-Partikeln 14 geachtet werden.

Ebenso kann das Gewichtsverhältnis zwischen den Polyesterfilamenten 12 und den PTFE-Partikeln 14 variiert werden. Besonders bevorzugt im Hinblick auf die Haftung, Reibung und Gleiteigenschaft hat sich jedoch herausgestellt, wenn im Kunststofffaden der Gewichtsanteil der PTFE-Partikel 14 zwischen 30 Gew.-% und 36 Gew.-% und der Gewichtsanteil der Polyesterfilamente 12 zwischen 64 Gew.-% und 70 Gew.-% beträgt.

Der Titer des Kunststofffadens 10 gemäß Figur 1 hat einen bevorzugten Wert zwischen 100 dtex und 600 dtex, insbesondere zwischen 400 dtex und 550 dtex (1 dtex = 1 g/1000 m Garn).

Durch diese Parameter wird eine ausreichend feste Einbindung der PTFE-Partikel 14 in die Polyesterfilamente 12 erreicht, die sowohl zu Gunsten der Verschleißfestigkeit als auch für die mechanische Bearbeitung ausreichend Halt finden. Deshalb behält die Gleitschicht ihre guten tribologischen Eigenschaften auch dann, wenn sie beispielsweise durch Fräsen von Nuten oder durch Aufbohren nachgearbeitet wird.

Die PTFE-Partikel 14 sind ferner über die Fadenlänge und damit über die gesamte gewobene, gewirkte oder gewickelte Struktur des Verstärkungselements homogen verteilt. Der Faden 10 lässt sich aufgrund des zum Teil lockeren Verbundes, welcher eine Vielzahl von Kanälen bildet, hervorragend benetzen und damit gut verarbeiten. Die in die Tiefe der Kanäle eindringende Vernetzung der Matrix sorgt für eine verbesserte Haftanbindung.

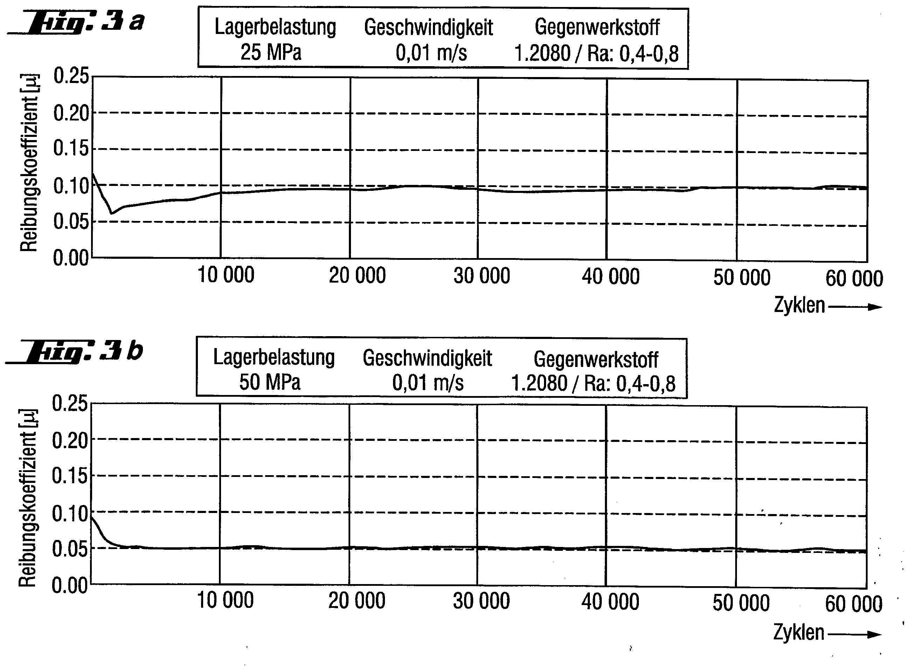

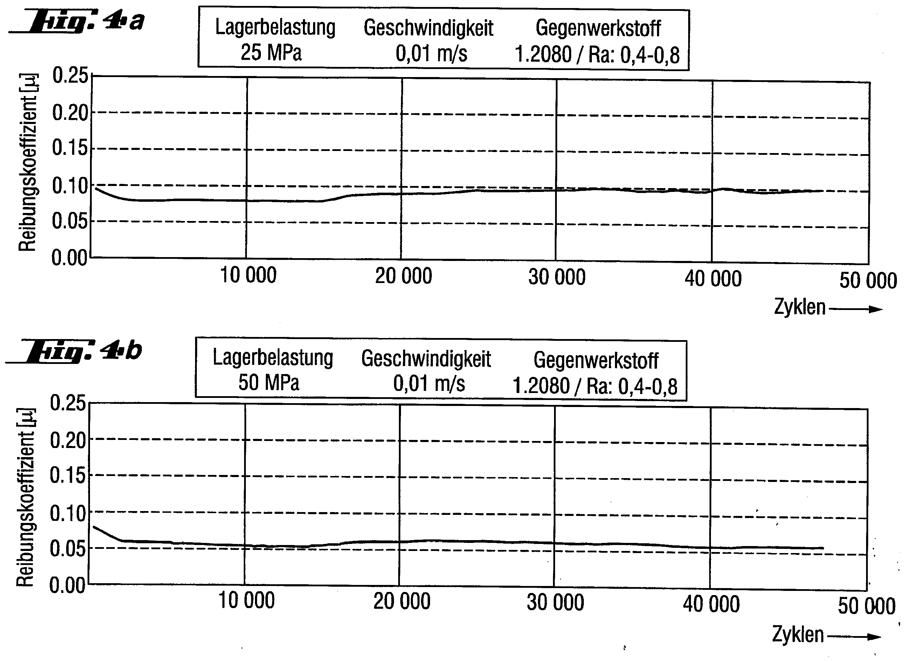

Insgesamt erscheint der Kunststofffaden 10 wie auch die fertige Gleitschicht aufgeraut oder faserig. Diese optische Rauhigkeit ist auf die zufällig orientierten PTFE-Partikel 14 zurückzuführen und aufgrund deren Gleiteigenschaft nicht mit einem erhöhten Reibwert verbunden. Insgesamt ist die Gleiteigenschaft der erfindungsgemäßen Gleitschicht in verschiedenen Anwendungen auch über lange Beanspruchungsdauer gleich bleibend gut, wie im Zusammenhang mit den Diagrammen gemäß Figuren 3 und 4 erkennbar wird.

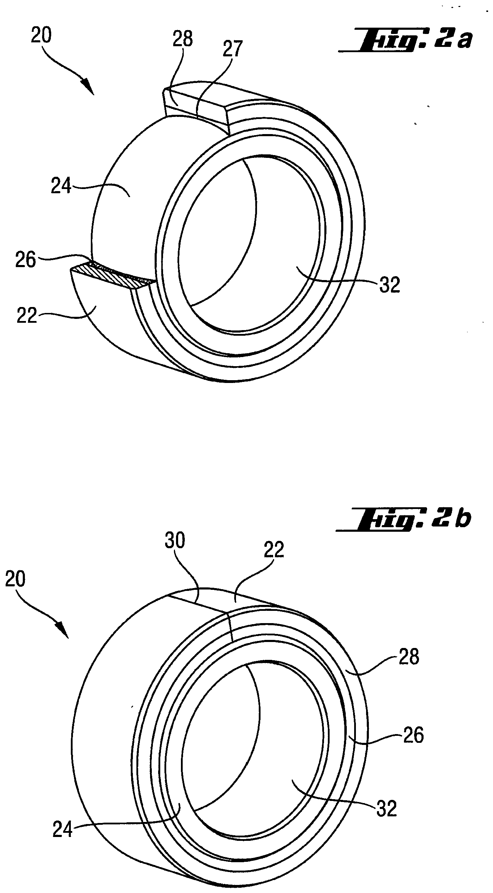

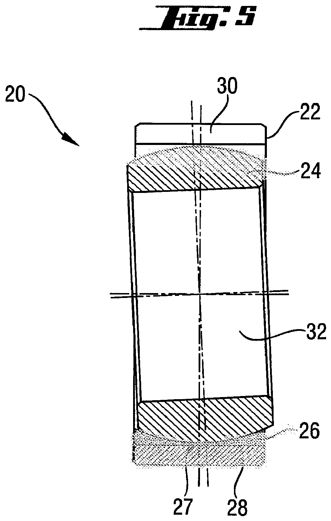

Figuren 2a, 2b und 5 zeigen das erfindungsgemäße Gelenklager 20 in verschiedenen Ansichten. Es besteht aus einem Außenring 22, der einen Innenring 24 einfasst, das heißt formschlüssig und unverlierbar umgibt. Der Außenring 22 weist auf seiner Innenseite eine Gleitschicht 26 und auf seiner Außenseite eine Tragschicht 28 auf.

Beide Schichten 26, 28 sind nacheinander im Wickelverfahren auf einem Wickeldorn abgelegt worden, wodurch eine typische Wickelstruktur entsteht. Das Wickeln stellt für rotationssymmetrische Gleitelemente ein besonders einfaches und kostengünstiges Herstellungsverfahren dar. Die Strukturen beider Schichten können individuell auf einfache Weise an die mechanischen Anforderungen des Lagers angepasst werden. Neben einfachen Kreuzstrukturen einzeln abgelegter Fäden lassen sich die Fäden auch zu Bündeln gruppiert wickeln, wodurch die entsprechende Schicht schneller gewickelt werden kann. Die Gleitschicht und die Tragschicht können auch in unterschiedlichen Verfahren hergestellt werden.

Während in der Gleitschicht 26 und der Tragschicht 28 unterschiedliche Verstärkungselemente, nämlich der in Figur 1 dargestellte Kunststofffaden einerseits bzw. Glasfasern in der Tragschicht 28 andererseits verwendet werden, ist die Kunststoffmatrix in beiden Schichten bevorzugt dieselbe, nämlich Epoxydharz. Dieses eignet sich aufgrund seiner hervorragenden Haftungs- und mechanischen Eigenschaften sehr gut. Alternativ können beispielsweise aber auch ungesättigte Polyesterharze oder Vinylesterharze verwendet werden.

Für die Tragschicht 28 kommen außer den bewährten Glasfasern auch beispielsweise Kohlefasern als Verstärkungselemente in Betracht. Auch kann der Faden zunächst zu einem Gewebe, Gewirke oder einem sonstigen Gelege vorverarbeitet werden.

Der Kunststoffmatrix der Gleitschicht 26 werden in vielen Anwendungsfällen Festschmierstoffe wie beispielsweise Graphit-Partikel oder PTFE-Partikel beigemischt. Die Tragschicht 28 weist dagegen in aller Regel eine Kunststoffmatrix ohne Beimischung zusätzlicher Bestandteile auf.

Die Gleitschicht 26 weist auf Ihrer nach innen gewandten Seite eine Sphärisches Oberflächenprofil auf, welches komplementär zu dem Kugelsegment ist, das von dem Innenring 24 gebildet wird. Dieses Oberflächenprofil wird nach Aushärten des fertigen Wickelkörpers, Abtrennen eines Rings und Trennen des Rings entlang der Trennfuge 30 durch Bohren oder Drehen erzeugt. Dabei werden aufgrund der zuvor beschriebenen Eigenschaften des erfindungsgemäß verwendeten Fadens als Verstärkungselement eine sehr hohe Genauigkeit erzielt und dabei die tribologischen Eigenschaften der Gleitschicht nicht beeinträchtigt. Insbesondere kann auf diese Weise das erwünschte Lagerspiel sehr genau eingestellt werden. Die Gleitschicht 26 ist aufgrund des Profils im Scheitelbereich 27 radial dünner ausgebildet als die Tragschicht 28. Deshalb muss beim Wickeln bereits die Geometrie des Gelenklagers 20 berücksichtigt und eine ausreichend dicke Gleitschicht 26 aufgetragen werden.

Der Innenring 24 wird danach in den fertigen Außenring 22 eingesetzt, wobei letzterer im Bereich der Trennfuge 30 gespreizt wird. Das Spreizen kann durch Einpressen des Innenrings 24 oder unterstützend durch aufziehend des Außenrings 22 geschehen. Der Außenring schnappt danach aufgrund seiner Eigenspannung elastisch zusammen und fixiert den Innenring unverlierbar. Die Trennfuge 30 schließt sich.

Der Innenring 24 weist wie gewöhnlich axial eine größere Länge auf als der Außenring 22, sodass er, wenn beide Ringe koaxial ausgerichtet sind, aus diesem auf beiden Seiten symmetrisch herausragt. Der Innenring 24 weist wie ebenfalls gewöhnlich eine zentrale Durchgangsbohrung 32 zur Aufnahme einer zu lagernden Welle auf.

Die Figuren 3a,b zeigen das Verhalten des Reibungskoeffizienten zwischen einer erfindungsgemäßen Radialgleitlagerbuchse und einer darin gelagerten Welle aus Stahl, welches in einem Testversuch im Trockenlauf ermittelt wurde. Hierbei wurde die Welle mit einer Rauheit von Rₐ=0,4 bis 0,8 um einen Winkel von 45° und mit einer Umfangsgeschwindigkeit von 0,01 m/s hin- und hergedreht. Die dabei radial aufgebrachte spezifische Belastung betrug im Fall der oberen Messkurve 25 MPa (Fig. 3a). Im Fall der unteren Messkurve (Fig. 3b) wurde unter ansonsten identischen Bedingungen eine radiale spezifische Belastung von 50 MPa aufgebracht.

Die Ergebnisse zeigen, dass nach einer kurzen Einlaufphase von etwa 2000 Zyklen jeweils ein minimaler Reibungskoeffizient erreicht wurde, welcher im Fall der höheren Belastung über die gesamte Testdauer von 60000 Zyklen in etwa konstant bei 0,05 lag. Im Fall der geringeren Belastung stieg der Reibungskoeffizient nach Erreichen des Minimums zunächst langsam von etwa 0,06 an, erreichte nach einer Dauer von etwa 15000 Zyklen aber eine Sättigung bei etwa 0,1. Der leicht erhöhte Reibungskoeffizient im Fall der geringeren Belastung steht im Einklang mit der Verschleißrate. Diese lag bei 25 MPa bei einem Wert von 5,1 µm/km (Gleitstrecke), während er im Fall der höheren Belastung von 50 MPa einen Wert von 10,7 µm/km erreichte. Durch den insgesamt erhöhten Verschleiß bei größerer Belastung von 35 µm gegenüber 17,5 µm bei geringerer Belastung wird mehr Festschmierstoff freigesetzt, der den Reibwert senkt. Daher konnte vor allem im Fall der höheren Belastung auch eine signifikante Glättung der druckbeaufschlagten Gleitlagerfläche festgestellt werden.

Die Figuren 4a und 4b zeigen das Verhalten des Reibungskoeffizienten der in einer Radialgleitlagerbuchse gelagerten Welle unter Nasslaufbedingungen, d. h. im Wasser. Die Testbedingungen waren ansonsten dieselben wie oben. Auch hierbei zeigt sich, dass der Reibungskoeffizient im Fall der höheren Belastung von 50 MPa, unteres Diagramm in Figur 4b, geringer ist als im Fall der niedrigen Belastung von 25 MPa, oberes Diagramm Figur 4b. Der Reibungskoeffizient erreichte nach einer etwas verlängerten Einlaufphase im Vergleich zum Trockenlauf bei 25 MPa in etwa den gleichen Wert von 0,1. Bei 50 MPa konnte ein im Vergleich zum Trockenlauf etwas erhöhter mittlerer Wert von 0,06 ermittelt werden. Auch hier war eine geringere Verschleißrate bei 25 MPa von 8,1 µm/km und somit ein über die gesamte Testdauer von etwa 47000 Zyklen geringerer Verschleiß von 21,25 µm gegenüber 27,2 µm/km bzw. 70 µm bei 50 MPa feststellbar. Wiederum konnte vor allem im Fall der höheren Belastung eine signifikante Glättung der druckbeaufschlagten Gleitlagerfläche festgestellt werden.

In beiden Belastungsfällen war aber keine signifikante Ablösung der Gleitschicht erkennbar. Die Verschleißwerte lagen deutlich unter denen der bekannten Kunststoffgleitelemente.

Die vorstehenden Ergebnisse und Schlussfolgerungen lassen sich auf das erfindungsgemäße Gelenklager übertragen, wenn als Gleitpartner für den Außenring aus Faserverbundwerkstoff mit der PTFE-Partikel enthaltenden Faser ein Innenring aus Stahl oder zumindest mit einer Stahloberfläche, bevorzugt aus einem Stahl mit einer Oberflächenharte > 120 HB und besonders bevorzugt mit einer Oberflächenharte > 180 HB ausgewählt wird. Alternativ kommen auch Paarungen aus dem erfindungsgemäßen Faserverbundwerkstoff mit einem Innenring aus Keramik oder einem Metallkeramikwerkstoff in Frage.

### Bezugszeichenliste

- 10: Kunststofffaden
- 12: Polyesterfilament
- 14: PTFE-Partikel

- 20: Gelenklager
- 22: Außenring
- 24: Innenring
- 26: Gleitschicht
- 28: Tragschicht
- 30: Trennfuge
- 32: Bohrung

## Patentansprüche

1. Außenring (22) für ein Gelenklager (20) mit einer innen liegenden Gleitschicht (26) und einer außen liegenden Tragschicht (28), wobei die Gleitschicht und die Tragschicht aus einem gewickelten Faserverbundwerkstoff gebildet sind, **gekennzeichnet durch** genau eine den Außenring öffnende Trennfuge (30), wobei die Gleitschicht einen Kunststofffaden (10) als Verstärkungselement enthält, der Polyesterfilamente (12) und eingearbeitete PTFE-Partikel (14) aufweist, die in die Polyesterfilamente eingesponnen sind.

2. Außenring nach Anspruch 1 **dadurch gekennzeichnet, dass** im Kunststofffaden (10) der Anteil der PTFE-Partikel zwischen 2 Gew.-% und 60 Gew.-% und der Anteil der Polyesterfilamente zwischen 40 Gew.-% und 98 Gew.-% beträgt.

3. Außenring nach Anspruch 2, **dadurch gekennzeichnet, dass** im Kunststofffaden (10) der Anteil der PTFE-Partikel zwischen 30 Gew.-% und 36 Gew.-% und der Anteil der Polyesterfilamente zwischen 64 Gew.-% und 70 Gew.-% beträgt.

4. Außenring nach einem der vorstehenden Ansprüche,
**dadurch gekennzeichnet, dass** die Gleitschicht (26) eine Kunststoffmatrix aus Kunstharz aufweist.

5. Außenring nach Anspruch 4, **dadurch gekennzeichnet, dass** die Kunststoffmatrix aus Epoxydharz besteht.

6. Außenring nach Anspruch 4 oder 5, **dadurch gekennzeichnet, dass** die Kunststoffmatrix PTFE-Partikel enthält.

7. Außenring nach einem der vorstehenden Ansprüche,
**dadurch gekennzeichnet, dass** die Trennfuge (30) keilförmig mit einem sich radial nach innen verjüngenden Querschnitt ausgebildet ist.

8. Gelenklager (20) mit einem Außenring (22) nach einem der vorstehenden Ansprüche und mit einem Innenring (24).

9. Gelenklager nach Anspruch 8, **dadurch gekennzeichnet, dass** der Innenring (24) eine Stahloberfläche mit einer Oberflächenhärte größer als 120 HB aufweist.

10. Gelenklager nach Anspruch 9, **dadurch gekennzeichnet, dass** der Innenring (24) eine Stahloberfläche mit einer Oberflächenhärte größer als 180 HB aufweist.

11. Verfahren zur Herstellung eines Außenrings (22) für ein Gelenklager (20), bei dem nacheinander eine Gleitschicht (26) und eine Tragschicht (28) aus kunstharzgetränkten Fasern auf einen Wickeldorn aufgewickelt und nach dem Aushärten aus dem so erzeugten Wickelkörper Außenringe gebildet werden,
**dadurch gekennzeichnet, dass** die Gleitschicht (26) und Tragschicht (28) auf einen zylindrischen Wickeldorn aufgewickelt werden, der Außenring mit genau einer diesen öffnenden Trennfuge (30) versehen und Gleitschichtmaterial auf dessen Innenseite dergestalt abgetragen wird, dass eine teilsphärische Kontur zur Aufnahme eines komplementären Innenrings erhalten wird und dass die Gleitschicht mittelbar oder unmittelbar aus einem Kunststofffaden (10) mit Polyesterfilamenten (12) und mit darin eingesponnenen PTFE-Partikeln (14) gewickelt wird.

12. Verfahren nach Anspruch 11, **dadurch gekennzeichnet, dass** die Trennfuge (30) mit einem keilförmigen, sich radial nach innen verjüngenden Querschnitt erzeugt wird.

13. Verfahren nach einem der Ansprüche 11 oder 12,
**dadurch gekennzeichnet, dass** die Trennfuge (30) mittels Wasserstrahlschneiden erzeugt wird.

## Claims

1. Outer race (22) for a pivot bearing (20) comprising an internal sliding layer (26) and an external support layer (28), the sliding layer and the support layer being formed from a wound fibre composite material, **characterised by** exactly one parting line (30) that opens the outer race, the sliding layer containing a plastics thread (10) as the reinforcing element, which has polyester filaments (12) and incorporated PTFE particles (14) which are spun into the polyester filaments.

2. Outer race according to claim 1, **characterised in that**, in the plastics thread (10), the proportion of PTFE particles is between 2 wt.% and 60 wt.%, and the proportion of the polyester filaments is between 40 wt.% and 98 wt.%.

3. Outer race according to claim 2, **characterised in that**, in the plastics thread (10), the proportion of PTFE particles is between 30 wt.% and 36 wt.%, and the proportion of the polyester filaments is between 64 wt.% and 70 wt.%.

4. Outer race according to any one of the preceding claims, **characterised in that** the sliding layer (26) has a plastics matrix of synthetic resin.

5. Outer race according to claim 4, **characterised in that** the plastics matrix consists of epoxy resin.

6. Outer race according to either claim 4 or claim 5, **characterised in that** the plastics matrix contains PTFE particles.

7. Outer race according to any one of the preceding claims, **characterised in that** the parting line (30) is designed in the shape of a wedge having a cross section that tapers radially inwards.

8. Pivot bearing (20) comprising an outer race (22) according to any one of the preceding claims and comprising an inner race (24).

9. Pivot bearing according to claim 8, **characterised in that** the inner race (24) has a steel surface having a surface hardness exceeding 120 HB.

10. Pivot bearing according to claim 9, **characterised in that** the inner race (24) has a steel surface having a surface hardness exceeding 180 HB.

11. Method for producing an outer race (22) for a pivot bearing (20), in which a sliding layer (26) and a support layer (28) consisting of fibres impregnated with synthetic resin are wound onto a winding mandrel and outer races are formed from the resulting wound body after hardening, **characterised in that** the sliding layer (26) and support layer (28) are wound onto a cylindrical winding mandrel, the outer race is provided with exactly one parting line (30) that opens said outer race, and sliding-layer material on the inside thereof is removed to the extent that a partially spherical contour is achieved for receiving a complementary inner race, and **in that** the sliding layer is wound indirectly or directly from a plastics thread (10) having polyester filaments (12) and having PTFE particles (14) spun therein.

12. Method according to claim 11, **characterised in that** the parting line (30) is produced having a wedge-shaped cross section that tapers radially inwards.

13. Method according to either claim 11 or claim 12, **characterised in that** the parting line (30) is produced by water jet cutting.

## Revendications

1. Bague extérieure (22) pour un palier articulé (20),
avec une couche antifriction (26) placée à l'intérieur et
une couche porteuse (28) placée à l'extérieur,
sachant que la couche antifriction et la couche porteuse sont constituées d'un matériau composite enroulé renforcé par des fibres,
**caractérisée par** exactement un joint de séparation (30) ouvrant la bague extérieure, sachant que la couche antifriction contient comme élément de renforcement un fil (10) de matière plastique, qui présente des filaments (12) de polyester et des particules incorporées (14) de polytétrafluoréthylène qui sont enveloppées dans les filaments de polyester.

2. Bague extérieure selon la revendication 1, **caractérisée en ce que**, dans le fil (10) de matière plastique, la part de particules de polytétrafluoréthylène est comprise entre 2 % en poids et 60 % en poids, et la part de filaments de polyester est comprise entre 40 % en poids et 98 % en poids.

3. Bague extérieure selon la revendication 2, **caractérisée en ce que**, dans le fil (10) de matière plastique, la part de particules de polytétrafluoréthylène est comprise entre 30 % en poids et 36 % en poids, et la part de filaments de polyester est comprise entre 64 % en poids et 70 % en poids.

4. Bague extérieure selon l'une des revendications précédentes, **caractérisée en ce que** la couche antifriction (26) présente une matrice de matière plastique en résine synthétique.

5. Bague extérieure selon la revendication 4, **caractérisée en ce que** la matrice de matière plastique est constituée de résine époxy.

6. Bague extérieure selon la revendication 4 ou 5, **caractérisée en ce que** la matrice de matière plastique contient des particules de polytétrafluoréthylène.

7. Bague extérieure selon l'une des revendications précédentes, **caractérisée en ce que** le joint de séparation (30) est réalisé cunéiforme avec une section se rétrécissant radialement vers l'intérieur.

8. Palier articulé (20) avec une bague extérieure (22) selon l'une des revendications précédentes et avec une bague intérieure (24).

9. Palier articulé selon la revendication 8, **caractérisé en ce que** la bague intérieure (24) présente une surface en acier avec une dureté superficielle supérieure à 120 HB.

10. Palier articulé selon la revendication 9, **caractérisé en ce que** la bague intérieure (24) présente une surface en acier avec une dureté superficielle supérieure à 180 HB.

11. Procédé de fabrication d'une bague extérieure (22) pour un palier articulé (20), selon lequel une couche antifriction (26) et une couche porteuse (28) en fibres imprégnées de résine synthétique sont successivement enroulées sur un mandrin d'enroulement et des bagues extérieures sont formées à la suite du durcissement à partir du corps enroulé ainsi formé,
**caractérisé en ce que** la couche antifriction (26) et la couche porteuse (28) sont enroulées sur un mandrin d'enroulement cylindrique, la bague extérieure est pourvue d'exactement un joint de séparation (30) ouvrant cette bague, et du matériau de couche antifriction est déposé sur sa face intérieure de telle sorte qu'on obtient un contour partiellement sphérique destiné à recevoir une bague intérieure complémentaire,
et **en ce que** la couche antifriction est enroulée indirectement ou directement à partir d'un fil (10) de matière plastique avec des filaments (12) de polyester et des particules (14) de polytétrafluoréthylène enveloppées dans ces filaments.

12. Procédé selon la revendication 11, **caractérisé en ce que** le joint de séparation (30) est produit avec une section cunéiforme se rétrécissant radialement vers l'intérieur.

13. Procédé selon l'une des revendications 11 ou 12, **caractérisé en ce que** le joint de séparation (30) est produit par découpage au jet d'eau.
